# EUROPEAN PATENT APPLICATION

(11) **EP 2 527 244 A1**
(43) Date of publication of application: **28.11.2012**
(21) Application number: 11167848.8
(22) Date of filing: 27.05.2011
(51) Int. Cl.: B63J 2/04, B63J 2/12, F02G 5/04

(54) **System and method for providing heat on a ship**

(71) Applicant: Caterpillar Motoren GmbH & Co. KG, 24159 Kiel (DE)
(72) Inventor: Schlemmer-Kelling, Udo, 24113 Molfsee (DE)
(74) Representative: Kramer - Barske - Schmidtchen

(57) **Abstract**

A method for providing heat on a ship (100) having at least two combustion engines (12, 14) may comprise stopping operation of at least a first one (12) of the at least two combustion engines, and operating at least a second one (14) of the at least two combustion engines in a heat generation mode in which the heat output of the at least one combustion engine operating in the heat generation mode is greater than in the multi-engine operation mode. The step of operating at least a second one of the at least two combustion engines in the heat generation mode may include increasing a temperature of charge air of the at least one combustion engine (14) operating in the heat generation mode to a temperature that is higher than in the multi-engine operation mode, thereby increasing a temperature of exhaust gas, and recovering heat from the exhaust gas having the increased temperature.

## Description

### Technical Field

The present disclosure generally relates to a system and method for providing heat onboard a ship and, more particularly, to operating one ore more combustion engines of a multi-engine system of a ship in an operating mode that provides increased heat at low to medium load.

### Background

In large ships, specifically cruise ships, there is a need for an increased amount of heat under certain conditions.

Heat can be recovered, for example, from the exhaust gas of an engine and from a cooling circuit for cooling charge air. An engine system utilizing the heat in a high temperature cooling circuit is disclosed, for example, in EP 0 750 106 B1 to improve the total efficiency rate of a supercharged combustion engine.

The present disclosure is directed, at least in part, to improving or overcoming one or more aspects of prior systems.

### Summary of the Disclosure

According to an aspect of the present disclosure, a method for providing heat on a ship having at least two combustion engines, each configured to provide a mechanical output and a heat output in a multi-engine operation mode, may comprise stopping operation of at least a first one of the at least two combustion engines, and operating at least a second one of the at least two combustion engines in a heat generation mode in which the heat output of the at least one combustion engine operating in the heat generation mode is greater than in the multi-engine operation mode. The step of operating at least a second one of the at least two combustion engines in a heat generation mode may include increasing a temperature of charge air of the at least one combustion engine operating in the heat generation mode to a temperature that is higher than in the multi-engine operation mode, thereby increasing a temperature of exhaust gas of the at least one combustion engine operating in the heat generation mode, and recovering heat from the exhaust gas having the increased temperature.

According to another aspect of the present disclosure, a multi-engine system for a ship may comprise at least two combustion engines, each configured to provide a mechanical output and a heat output in a multi-engine operation mode. The at least two combustion engines may include at least one combustion engine configured to operate in a heat generation mode in which the heat output is greater than in the multi-engine operation mode, and a controller configured to control operation of the at least two combustion engines. The multi-engine system may further comprise a controller. The controller may be configured to stop operation of at least a first one of the at least two combustion engines and operate at least a second one of the at least two combustion engines in the heat generation mode when a total required heat output is less than a threshold heat output. The controller may further be configured to increase a temperature of charge air of the at least one combustion engine operating in the heat generation mode to a temperature that is higher than in the multi-engine operation mode, thereby increasing a temperature of exhaust gas of the combustion engine, to recover heat from the exhaust gas having the increased temperature.

According to another aspect of the present disclosure, a program may comprise computer-executable instructions which, when executed by a computer, cause the computer to perform the steps of the method according to the above aspect of the present disclosure.

Other features and aspects of this disclosure will be apparent from the following description and the accompanying drawings.

### Brief Description of the Drawings

Fig. 1 is a schematic overview of a multi-engine system of a ship according to an exemplary embodiment;

Fig. 2 is a schematic diagram illustrating the flow of heat within a combustion engine for use in the multi-engine system of Fig. 1;

Fig. 3 is a schematic diagram illustrating the flow of heat within another combustion engine for use in the multi-engine system of Fig. 1; and

Fig. 4 is a flow chart illustrating a control strategy according to an exemplary embodiment.

### Detailed Description

The following is a detailed description of exemplary embodiments of the present disclosure. The exemplary embodiments described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that, if the charge air temperature of a combustion engine in a multi-engine system for a ship is increased, the engine may generate more heat to be recovered, e.g., for steam generation. As used herein, the term "charge air" may be used for both intake air (for example, ambient air) supplied to one or more turbochargers for compression and compressed air exiting the one or more turbochargers and being supplied to the combustion unit for combustion.

Increasing the heat generation in one or more of the combustion engines associated with the multi-engine system may allow producing the required heat for the ship with a reduced number of combustion engines. This may allow stopping operation of one or more of the combustion engines of the ship, for example, at harbor. For example, at harbor, the required amount of electricity onboard the ship can easily be provided by running on a single engine, while the single engine may not be capable of providing sufficient heat for the various heat-based systems on the ship, such as air conditioning systems, heating systems, etc.

In some embodiments, intake air may be heated by a heating system such as a heater arranged upstream of a turbocharger system associated with the engine. For example, a charge air cooler, which may already be installed and used to regulate the charge air temperature, may be reversely operated and used as a heater. Alternatively or additionally, a separate heater may be provided for heating the intake air.

The heat required by the heater for raising the temperature of the intake air may be supplied by a coolant medium in a high temperature cooling circuit and/or the hot exhaust gas of the engine. Using these high temperature heat sources may allow increasing the intake air temperature to temperatures that are, e.g., considerably higher than the ambient temperature. Accordingly, the compressed air exiting the turbocharger may have a temperature that is increased with respect to normal operation. In addition, the charge air exiting the turbocharger may be less dense, such that a reduced amount of air may be provided to the engine. Due to the less dense charge air, the engine may generate warmer exhaust such that the exhaust exiting the turbine of the turbocharger may have a higher temperature. Thus, more heat may be recovered from the exhaust gas downstream of the turbocharger. The heat of the higher temperature exhaust gas may then be used to produce, e.g., an increased amount of steam for the heat-based systems on the ship despite using the reduced number of combustion engines, for example, a single engine.

In some embodiments, the temperature of the charge air before being supplied to the cylinders may be increased, e.g., by operating a low temperature cycle accordingly.

For example, the charge air may be heated such that the temperature of the charge air entering the engine may be considerably higher than 45°C, limiting the mechanical output produced by the engine. However, as only low or medium mechanical output may be required when the ship is at harbor, a loss of mechanical output may be outweighed by the gain in heat produced by the engine, and the increased amount of steam that may be generated from this heat may be sufficient to supply the demand with a reduced number of engines.

In addition or as an alternative to using the heat of the coolant medium in the high temperature cooling circuit or the heat of the exhaust gas, or in addition or as an alternative to operating the low temperature cooling circuit at a higher temperature, providing an auxiliary heater between the low temperature cooling circuit and the engine may also be used to increase the temperature of the charge air entering the engine, thereby increasing the amount of heat that can be recovered in either the high temperature cooling circuit or the exhaust gas system.

As illustrated in the following, increasing the temperature of the charge air may operate the engine such that it produces an increased amount of heat while being less efficient in producing mechanical output.

A control strategy for regulating the temperature of the charge air entering the engine may be used to balance the mechanical output and the thermal output generated by the engine depending on the required mechanical output and/or heat. For example, a required amount of heat may be estimated, and the temperature of the charge air entering the engine may be regulated to a value that results in the required amount of heat being generated by the combustion engine while its mechanical output is reduced. For example, the control strategy may be used to regulate the amount of heat transferred from the high temperature cooling circuit and/or the exhaust gas system to the charge air flowing through the heater upstream of the turbocharger.

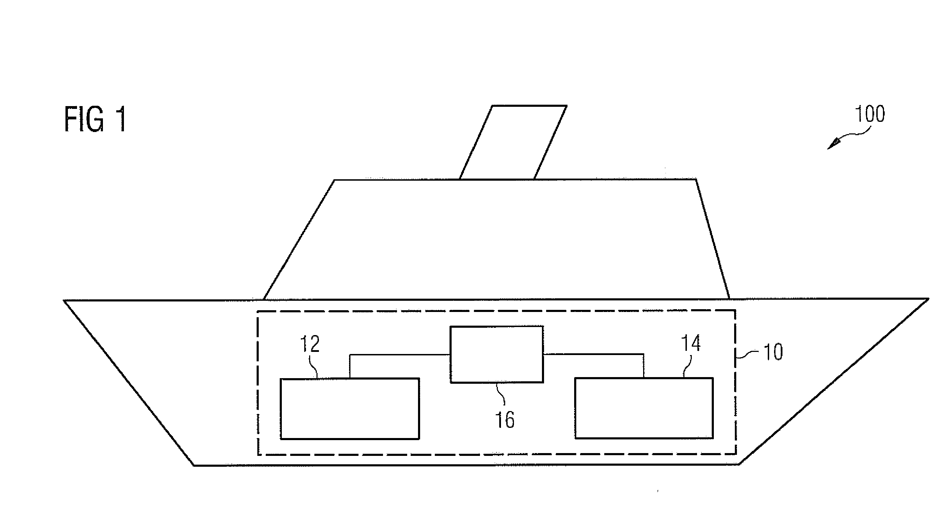

In the following and with reference to Figs. 1 to 4, embodiments of systems and methods for increasing the generation of heat onboard a ship including a multi-engine system are disclosed.

As illustrated in Fig. 1, a ship 100 such as a large cruise ship may include a multi-engine system 10. Multi-engine system 10 may generate mechanical output for propulsion of the ship as well as for driving one or more generators for generating electric power for the ship. Further, multi-engine system 10 may produce a heat output for supplying various heat-based systems of the ship with heat. E.g., heat for fresh water generation may be taken from the high temperature cooling circuit, or steam for power generation may be generated using the exhaust heat.

Multi-engine system 10 may include at least two combustion engines 12, 14 for providing mechanical and heat output. A controller 16 may be configured to control operation of combustion engines 12, 14. While two combustion engines 12, 14 are shown in Fig. 1, multi-engine system 10 may comprise a different number of combustion engines, for example, four or six.

When the ship 100 is at sea, in general, all combustion engines may be operated in a multi-engine operation mode to produce the required mechanical output for propelling the ship as well as the required electricity and heat for supplying the various systems of the ship 100. As used herein, the term "multi-engine operation mode" refers to the normal operation mode of a combustion engine for propelling the ship and generating the required electricity and heat. When the ship is at harbor, however, the mechanical and electric power requirements of the ship's systems may be met by operating only some or only one of combustion engines 12, 14. Accordingly, one or more of combustion engines 12, 14 may be switched off, for example, combustion engine 12. Using the disclosed methods or systems it may become possible to produce the required heat for supplying all the heat-based systems on the ship with heat with a reduced number of operated combustion engines.

For example, one or more of combustion engines 12, 14 may be combustion engines that are configured to be operated in an operation mode, herein referred to as "heat generation mode", that allows generating an increased amount of heat even if their mechanical output is reduced under certain circumstances. Herein, such a specialized combustion engine may also be referred to as a "steam optimized combustion engine", as in general steam is the primary source of heat used by the various heat-based systems onboard the ship.

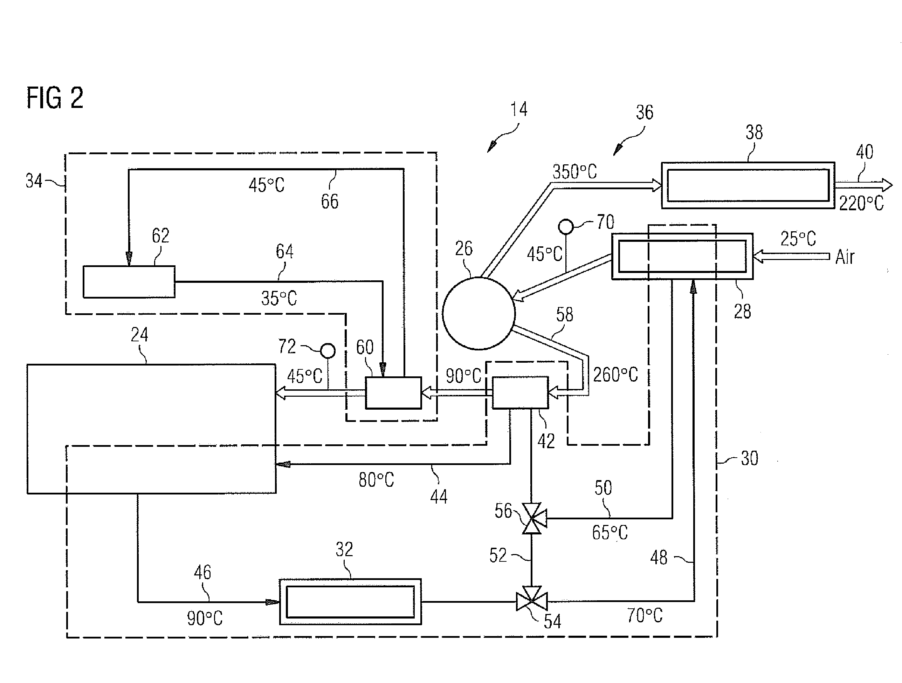

The general concept of such a steam optimized combustion engine 14 is described in the following in connection with Fig. 2.

Fig. 2 shows a schematic diagram illustrating the heat flow within combustion engine 14 that may be used as a steam optimized combustion engine. Combustion engine 14 may be operated by controller 16 in the heat generation mode, in which the combustion unit of combustion engine 14 may be operated less efficiently in order to increase the amount of heat generated by combustion engine 14.

Combustion engine 14 may include a combustion unit 24 such as, for example, a diesel, heavy fuel, or gas powered combustion unit. Combustion unit 24 may include a plurality of cylinders and a plurality of piston assemblies disposed within the cylinders (not shown). Combustion unit 24 may include any number of cylinders, and the cylinders may be disposed in an "in-line" configuration, a "V" configuration, or in any other conventional configuration.

Multiple sub-systems may be included in combustion engine 14 to support combustion processes in combustion unit 24. Among others, combustion engine 14 may include a charge air heater 28, a turbocharger 26, a high temperature (HT) cooling circuit 30, a low temperature (LT) cooling circuit 34, and an exhaust system 36. Charge air heater 28, turbocharger 26, high temperature cooling circuit 30, low temperature cooling circuit 34 and combustion unit 24 may be connected via a charge air passageway 58. Heater 28 may be configured to heat ambient air entering turbocharger 26. Turbocharger 26 may be configured to compress charge air for combustion unit 24. High temperature cooling circuit 30 may be configured to cool a flow of compressed air exiting turbocharger 26. Low temperature cooling circuit 34 may be configured to further cool the charge air downstream of high temperature cooling circuit 30 for providing the cooled charge air to combustion unit 24. Exhaust system 36 may be configured to exhaust byproducts of the combustion process in combustion unit 24 to the atmosphere. Additionally, temperature sensors 70, 72 may be arranged in the flow path of the charge air to the combustion unit 24 to detect the temperature of the charge air. For example, temperature sensor 70 may be arranged between heater 28 and turbocharger 26, and temperature sensor 72 may be arranged between low temperature cooling circuit 34 and combustion unit 24. Temperature sensors 70, 72 may be communicated with controller 16 via communication lines (not shown).

Heater 28 may be disposed upstream of turbocharger 26 and configured to heat air entering turbocharger 26. Heater 28 may be an additional heater specifically provided for heating charge air entering the turbocharger 26, or it may be a conventional charge air cooler which may conventionally be used to regulate the charge air temperature and may be reversely operated to be used as a heater. Heater 28 may be configured to transfer heat from high temperature cooling circuit 30 to the ambient air flowing through the heater 28, thereby heating the ambient air. For example, heater 28 may be configured to heat ambient air having a temperature of 25°C to a temperature of 30, 35, 40, 45, 50, 55, 60, 65°C or more.

Turbocharger 26 may be configured to receive heated ambient air from heater 28 and compress the heated ambient air, thereby further increasing the temperature of the charge air, for example, from 45°C to 260°C. Turbocharger 26 may include a compressor for compressing the charge air entering the turbocharger 26 and a turbine (not shown) driven by the exhaust gas in exhaust gas system 36. For example, there may be a fluid connection for the exhaust gas from combustion unit 24 to turbocharger 26 (not shown).

Referring again to Fig. 2, high temperature cooling circuit 30 may include a first heat exchanger 42, a first heat recovery system 32, a coolant line 44 connecting first heat exchanger 42 to combustion unit 24, a coolant line 46 connecting combustion unit 24 to first heat recovery system 32, a coolant line 48 leading from first heat recovery system 32 to heater 28, and a coolant line 50 leading from heater 28 to first heat exchanger 42. High temperature cooling circuit 30 may further include a bypass line 52 configured for connecting coolant line 48 to coolant line 50 while bypassing heater 28. A first valve 54 may be connecting coolant line 48 to bypass line 52, and a second valve 56 may connect bypass line 52 to coolant line 50. Valves 54, 56 each may be a standard three-way valve or any other type of controllable flow valve known in the art and may be connected to controller 16 via communication lines (not shown) or in any other appropriate manner. Valves 54, 56 may be configured to direct all or part of a coolant medium from first heat recovery system 32 to first heat exchanger 42 without passing through heater 28. Valves 54, 56 and thereby the amount of coolant bypassing heater 28 may be controlled by controller 16.

First heat exchanger 42 may be connected to turbocharger 26 by charge air passageway 58 and may be configured to receive compressed charge air exiting turbocharger 26. For example, the compressed charge air may have a temperature of 260°C. First heat exchanger 42 may be configured to cool the compressed charge air using a coolant medium circulating in high temperature cooling circuit 30. For example, first heat exchanger 42 may be configured to cool the compressed charge air to a temperature of 90°C.

First heat recovery system 32 may comprise components for utilizing the heat of the coolant medium flowing through high temperature cooling circuit 30, such as, for example, one or more heat exchangers (not shown) or other known components, e.g., components for fresh water generation.

During operation, the coolant medium in high temperature cooling circuit 30 is heated by the hot charge air flowing through first heat exchanger 42, for example, to a temperature of 80°C. The heated coolant medium may be directed to combustion unit 24 via coolant line 44 to cool combustion unit 24, thereby further increasing the temperature of the coolant medium, for example, to 90°C. After cooling combustion unit 24, the coolant medium may be directed to first heat recovery system 32 via coolant line 46. In first heat recovery system 32, heat is extracted from the coolant medium of the high temperature cooling circuit 30 to be utilized, for example, for generating fresh water from sea water at a pressure of, e.g., 0.4 bar. In the process, the temperature of the coolant medium is reduced to, for example, 70°C. The coolant medium exiting first heat recovery system 32 may be directed at least in part to heater 28 via coolant line 48. Part of the coolant medium may be directed to first heat exchanger 42 without passing through heater 28, via valve 54, bypass line 52, and valve 56.

The heat of the coolant medium of high temperature cooling circuit 30 directed to heater 28 may be used to heat the air drawn in by turbocharger 26. In this process, the temperature of the coolant medium is further reduced, for example, from 70°C to 65°C. The reduced temperature coolant medium of high temperature cooling circuit 30 may be further cooled by a cooler (not shown) before being directed to first heat exchanger 42 via coolant line 50 and used to cool the compressed charge air flowing through first heat exchanger 42.

In some embodiments, the low temperature cooling circuit may include a main cooler, and coolant of the high temperature cooling circuit may be exchanged with cold coolant from the low temperature cooling circuit described below.

Low temperature cooling circuit 34 may include a second heat exchanger 60 disposed downstream of first heat exchanger 42 and a cooler 62 connected to second heat exchanger 60 via coolant lines 64, 66 and configured to cool coolant in low temperature cooling circuit 34.

Low temperature cooling circuit 34 may be configured to further cool the compressed charge air from first heat exchanger 42. In one example, low temperature cooling circuit 34 may be configured to cool the compressed charge air in charge air passageway 58 from 90°C down to 45°C. Cooled charge air exiting second heat exchanger 60 may be directed to combustion unit 24 for combustion.

It should be appreciated that high temperature cooling circuit 30 and low temperature cooling circuit 34 may include additional valves, coolant lines, sensors, etc. that are not shown in Fig. 2, which may be used to control operation of the respective cooling circuits. The operation of the cooling circuits and their various components may, for example, be controlled by controller 16.

Exhaust system 36 may include components configured to direct exhaust from combustion unit 24 to the atmosphere. For the sake of simplicity, the section of exhaust system 36 connecting combustion unit 24 to turbocharger 26 is not shown. As shown in Fig. 2, exhaust system 36 may include an exhaust passageway 40 and a second heat recovery system 38 for utilizing heat of the exhaust flowing through exhaust passageway 40, for example, to generate steam. It is contemplated that exhaust system 36 may include different or additional components than described above, such as, for example, one or more exhaust components fluidly disposed within passageway 40 to treat and/or condition exhaust before discharge to the atmosphere.

During operation, hot exhaust is generated in combustion unit 24. The hot exhaust gas is directed to turbocharger 26 to drive the turbine of turbocharger 26 and from turbocharger 26 to second heat recovery system 38 via exhaust gas passageway 40. For example, the exhaust gas exiting turbocharger 26 may have an exhaust gas temperature of 350°C.

In second heat recovery system 38, the hot exhaust gas may be used to generate steam or utilized in any other known manner. During this process, the temperature of the exhaust gas may be reduced, for example, to 220°C. The reduced temperature exhaust gas may be released to the atmosphere via exhaust gas passageway 40.

During normal operation of combustion engine 14, e.g., when the total efficiency of the combustion processes of combustion unit 24 is to be high, valves 54, 56 may be controlled by controller 26 such that only a small portion of the coolant medium circulating in high temperature cooling circuit 30 or no coolant medium is directed to heater 28 to heat the air drawn in by turbocharger 26. In this manner, the temperature of the charge air may not become too high such that combustion unit 24 may be run at full power to efficiently provide the required mechanical output. For example, the charge air entering combustion unit 24 may have a temperature of up to 45°C before the power output may be reduced in efficiency. Accordingly, during normal operation, the temperature of the charge air may not be increased to temperatures above 45°C.

When the ship is at harbor and the required mechanical output of combustion engine 14 may be at low or medium levels, controller 16 may run combustion engine 14 in a heat generation mode in which efficiency of the power generation of combustion engine 14 may be sacrificed for increasing the heat produced by combustion engine 14. In this heat generation mode, controller 16 may control valves 54, 56 such that a large portion or all of the coolant medium in high temperature cooling circuit 30 may be directed to heater 28 via coolant line 48 to heat the air entering turbocharger 26 to higher temperatures, for example, temperatures in the range between 60 and 70°C. Alternatively or additionally, controller 16 may control operation of high temperature cooling circuit 30 and/or low temperature cooling circuit 34 such that the temperature of the coolant in high temperature cooling circuit 30 is increased. Due to the increased charge air temperature, the charge air will be compressed less by turbocharger 26, resulting in a reduced amount of air provided for combustion unit 24. In addition, the charge air entering combustion unit 24 may have a temperature above 45°C, for example, around 50, 55, 60 or 65°C. The combination of these two aspects may result in hotter exhaust gas produced by combustion unit 24, for example, having a temperature of 600°C instead of 500°C. Accordingly, the heat recovery in second heat recovery system 38 may be based on a temperature reduction of exhaust gas from, for example, 350 or 400°C to 220°C or even 50 to 60°C in the heat generation mode instead of from, for example, 300°C to 220°C or 50 to 60°C in the normal operation mode.

The temperature of the charge air entering combustion unit 24 may further be increased by reducing a cooling efficiency of low temperature cooling circuit 34, for example, by slower circulation of the coolant medium in the low temperature cooling circuit. Alternatively, an auxiliary heater (not shown) may be disposed downstream of second heat exchanger 60 of low temperature cooling circuit 34 to further increase the temperature of the charge air entering combustion unit 24. Such an auxiliary heater may be a conventional heater provided for heating the charge air entering combustion unit 24 in order to prevent condensation of water vapor in the charge air.

Controller 16 (Fig. 1) may be configured to control operation of combustion engine 14 based on a required mechanical output and a required thermal output. At low to medium load, controller 16 may control combustion engine 14 to operate in the heat generation mode. Controller 16 may be configured to control the heat generation in combustion engine 14 by raising the intake air temperature to appropriate levels. Controller 16 may be configured to receive inputs from temperature sensors 70, 72. Using the inputs from sensors 70, 72, controller 16 may be configured to, for example, adjust valves 54, 56 to increase or reduce the amount of coolant directed to heater 28 until the appropriate intake air temperature has been reached.

Controller 16 may be a single microprocessor or plural microprocessors that may include means for controlling, among others, an operation of combustion unit 24, first and second heat recovery systems 32, 38, and valves 54, 56 as well as other components of combustion engine 14. Controller 16 could be a general engine control unit (ECU) capable of controlling numeral functions associated with engine 14 and/or its associated components. Controller 16 may include all the components required to run an application such as, for example, a memory, a secondary storage device, and a processor such as a central processing unit or any other means known in the art for controlling combustion engine 14 and its various components. Various other known circuits may be associated with controller 16, including power supply circuitry, signal-conditioning circuitry, communication circuitry, and other appropriate circuitry. Controller 16 may analyze and compare received and stored data, and, based on instructions and data stored in memory or input by a user, determine whether action is required. For example, controller 16 may compare received values with target values stored in memory, and based on the results of the comparison, controller 16 may transmit signals to one or more components to alter the operation status thereof.

Controller 16 may include any memory device known in the art for storing data relating to operation of combustion engine 14 and its components. The data may be stored in the form of one or more maps that describe and/or relate, for example, operation of the valves 54, 56 to the intake air temperature downstream of heater 28 and/or the temperature of the charge air entering the combustion unit 24 and the amount of re-utilizable heat produced by combustion unit 24 and recoverable in first and second heat recovery systems 32, 38. Each of the maps may be in the form of tables, graphs, and/or equations, and include a compilation of data collected from lab and/or field operation of combustion engine 14. The maps may be generated by performing instrumented tests on the operation of combustion engine 14 under various operating conditions while varying parameters associated therewith. Controller 16 may reference these maps and control operation of one component in response to the desired operation of another component. For example, the maps may contain data on the intake air temperature upstream of turbocharger 26 for generating a required amount of heat in first and second heat recovery systems 32, 38.

In the above-described embodiment, heat of the coolant medium circulating through high temperature cooling circuit 30 has been used to heat the ambient air entering turbocharger 26. As an alternative, a portion of the heat of the exhaust gas flowing through exhaust gas passage 40 can be used to heat the ambient air entering turbocharger 26.

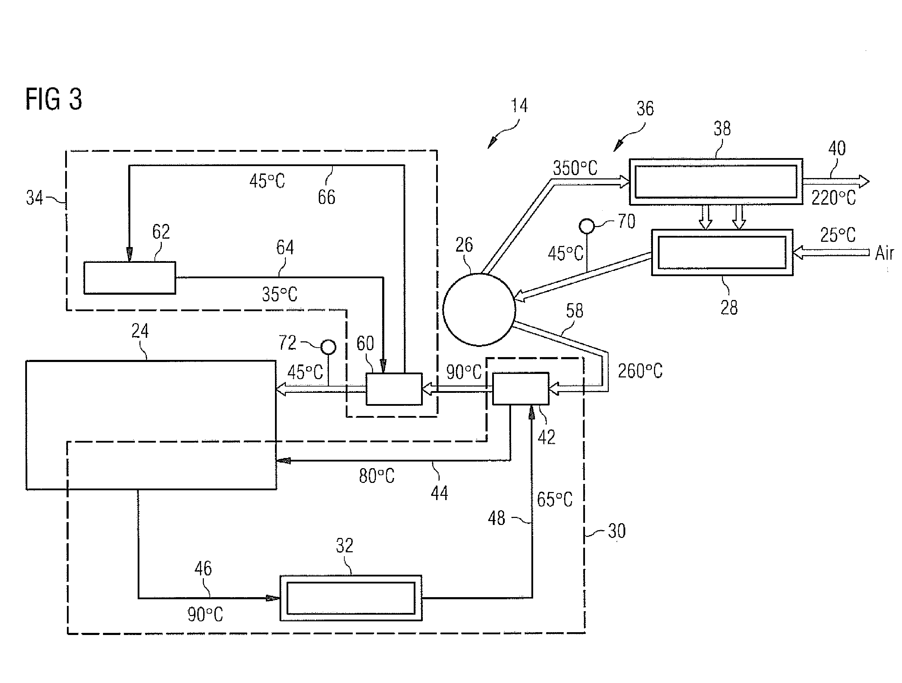

Fig. 3 illustrates an exemplary heat flow diagram in which heat of the exhaust gas flowing through exhaust gas passageway 40 is used to heat the ambient air.

In the embodiment of Fig. 3, coolant line 48 of high temperature cooling circuit 30 may directly connect first heat recovery system 32 to first heat exchanger 42. Accordingly, valves 54, 56, bypass line 52 and coolant line 50 may be omitted. Here, more heat may be recovered in first heat recovery system 32 than in the embodiment of Fig. 2.

In the embodiment shown in Fig. 3, heat of the exhaust gas in exhaust gas system 36 may be used to heat the ambient air in heater 28. This may be done in various ways, for example, by using heat radiation of the hot exhaust gas in exhaust gas passageway 40, by using a portion of the heat recovered in second heat recovery system 38, by diverting a specified portion of the exhaust gas to flow through the heater 28 via a bypass passageway (not shown), or any other manner known in the art. In case a portion of the exhaust gas is directed to heater 28, valves similar to valves 54, 56 in the embodiment shown in Fig. 2 may be used to control the amount of heat transferred to the charge air flowing through heater 28, thereby controlling the temperature of the charge air upstream of turbocharger 26.

These valves may be controlled by controller 16 in a manner similar to the control described above with respect to the embodiment shown in Fig. 2. In this manner, the same or similar effects as described above with respect to the embodiment shown in Fig. 2 may be obtained. In particular, combustion engine 14 may be operated in a heat generation mode with considerably increased intake air temperatures and increased heat production at the expense of less efficient overall operation of combustion engine 14.

It should be appreciated that in other embodiments, a combination of the cooling medium in high temperature cooling circuit 30 and the exhaust gas in exhaust gas system 36 may be used to heat the charge air. This may result in a reduced amount of heat lost in each of the respective sub-systems and may allow for a more sophisticated control strategy for controlling the temperature of the charge air. For example, depending on the required amount of heat, controller 16 may control high temperature cooling circuit 30 and exhaust gas system 36 such that only one of them is used to heat the charge air without affecting the amount of heat that can be recovered in the other one of them.

### Industrial Applicability

The disclosed multi-engine system for a ship and method of operating the same to provide an increased amount of re-utilizable heat using a reduced number of combustion engines of the multi-engine system may enable switching off one or more combustion engines during low to medium load, thereby decreasing fuel consumption and emissions, in particular, when the ship is at harbor. The multi-engine system and method of operating the same may be used on any ship including a plurality of combustion engines, each of which may be configured to provide a mechanical output and a heat output. Although described throughout as using the heat recovery systems of the combustion engines to generate, for example, steam and fresh water, the heat recovered in these systems may be utilized in a variety of different ways to provide heat for the various heat-based systems of the ship.

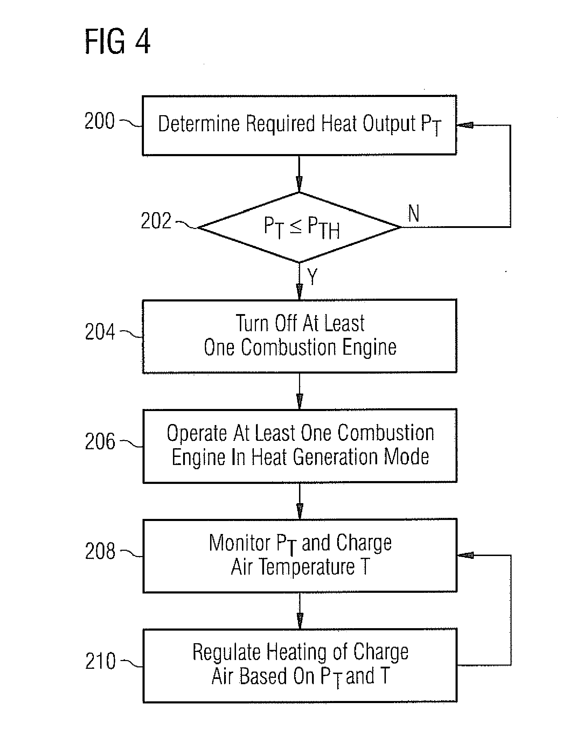

Fig. 4 shows an exemplary control strategy, which may be implemented by controller 16 to operate combustion engines 12, 14 of multi-engine system 10 to provide sufficient heat for the ship 100.

In step 200, controller 16 may determine a required amount of heat for the ship 100, e.g., a required heat output P_{T} of multi-engine system 10. To this end, controller 16 may be configured to receive inputs from various heat-based systems of the ship to determine the required heat output P_{T}. Alternatively or in addition, controller 16 may include several maps containing data on the expected required heat output P_{T} while the ship is at harbor, for example, depending on the total number of passengers on the ship, the time of day, the location of the ship, or the like.

In step 202, controller 16 may compare the required heat output P_{T} to a heat output threshold P_{TH} stored in the memory of controller 16, for example, at regular intervals. Heat output threshold P_{TH} may be set to specify values for which the required heat output can be produced by turning off one or more of the combustion engines of multi-engine system 10. For example, in step 202, controller 16 may determine that the required heat output P_{T} may be provided by combustion engine 14. If it is decided in step 202 that the required heat output can only be provided by operating all combustion engines 12, 14 of the multi-engine-system 10, the control strategy returns to step 200, in which controller 16 may continue to monitor the required heat output.

If it is determined in step 202 that the required heat output can be provided by a reduced number of combustion engines, for example, a single combustion engine, the control strategy proceeds to step 204.

In step 204, the combustion engines that are not needed may be turned off. For example, controller 16 may turn off combustion engine 12 in step 204.

In step 206, controller 16 may operate at least one combustion engine, for example, combustion engine 14, in a heat generation mode where the heat output produced by the at least one combustion engine may be increased at the cost of reducing the total efficiency of the at least one combustion engine. In step 206, controller 16 may use, for example, inputs received from sensors 70, 72 and one or more maps stored in the memory of controller 16, as well as, for example, an operator input, to set the temperature of the charge air to be supplied to the combustion unit 24 and correspondingly adjust operation of the same. Controller 16 may control, for example, valves 54, 56 or other components of combustion engine 14 such that the charge air entering combustion unit 24 has the desired temperature.

In step 208, controller 16 may continue to monitor the required heat output P_{T} and the temperature T of the charge air to adjust operation of the at least one combustion engine operating in the heat generation mode accordingly.

In step 210, controller 16 may regulate the intake air temperature based on the required heat output P_{T} and the temperature T of the charge air obtained in step 208. After regulating the intake air temperature to the desired value, controller 16 may return to step 208.

The control strategy, i.e., the heat generation mode, may be terminated, for example, when the ship leaves the harbor, or when controller 16 determines in step 208 that the required heat output can no longer be provided by combustion engine 14.

The term "combustion engine" as used herein is not specifically restricted and comprises any engine in which a fuel combustion process is performed. Examples of fuel include liquid fuel such as diesel, marine diesel and heavy oil. Examples of combustion engines for the herein disclosed operation in a heat generation mode by heating charge air of the combustion engine include medium speed internal combustion diesel engines like engines of the series M20, M25, M32, M43 manufactured by Caterpillar Motoren GmbH & Co. KG, Kiel, Germany.

While a multi-engine system for a ship and a method of operating the same has been described, the disclosed multi-engine system and method of operating the same may be used in a power plant such as an engine-based cogeneration system having plural combustion engines where, for example, in cold conditions, an increased amount of heat may be generated by operating one or more of the combustion engines in the heat generation mode.

Although the combustion engines described herein included a single turbocharger and, accordingly, a single compressor, the disclosed system and method may also be used in two-stage turbocharged combustion engines having a low-pressure compressor and a high-pressure compressor. In such engines, for example, ambient air supplied to the low-pressure compressor may be heated, and a first high temperature cooling circuit and a first low temperature cooling circuit may be disposed between the low-pressure compressor and the high-pressure compressor. A second high temperature cooling circuit and a second low temperature cooling circuit may be disposed downstream of the high-pressure compressor.

Although the preferred embodiments of the disclosed multi-engine system and method of operating the same have been described herein, improvements and modifications may be incorporated without departing from the scope of the following claims.

## Claims

1. A method for providing heat on a ship (100) having at least two combustion engines (12, 14), each configured to provide a mechanical output and a heat output in a multi-engine operation mode, comprising the steps of:
stopping operation of at least a first one (12) of the at least two combustion engines (204); and
operating at least a second one (14) of the at least two combustion engines in a heat generation mode in which the heat output of the at least one combustion engine (14) operating in the heat generation mode is greater than in the multi-engine operation mode (206),
wherein the heat generation mode includes increasing a temperature of charge air of the at least one combustion engine (14) operating in the heat generation mode to a temperature that is higher than in the multi-engine operation mode, thereby increasing a temperature of exhaust gas of the at least one combustion engine (14) operating in the heat generation mode, and recovering heat from the exhaust gas having the increased temperature.

2. The method according to claim 1, further including:
compressing the charge air; and
cooling the compressed charge air using a sequence of a high temperature cooling circuit (30) and a low temperature cooling circuit (34).

3. The method according to claim 2, wherein the step of increasing the temperature of the charge air includes reducing a cooling power of the low temperature cooling circuit (34).

4. The method according to claim 2 or 3, further including:
heating the charge air using at least one of heat of a coolant medium of the high temperature cooling circuit (30) and heat of the exhaust gas.

5. The method according to claim 4, further including controlling the amount of heat used for heating the charge air.

6. The method according to any one of claims 1 to 5, further including:
determining a required heat output; and
adjusting the temperature of the charge air to generate at least the required heat output.

7. The method according to any one of claims 1 to 6, further including:
detecting the temperature of the charge air (208); and
regulating the charge air temperature based on the detected temperature (210).

8. The method according to any one of claims 1 to 7, further including:
determining a total required heat output (200);
determining whether the total required heat output is less than a threshold heat output (202); and
stopping operation of at least the first one of the at least two combustion engines and operating at least the second one of the at least two combustion engines in the heat generation mode when the total required heat output is less than the threshold heat output.

9. A multi-engine system (10) for a ship (100), comprising:
at least two combustion engines (12, 14), each configured to provide a mechanical output and a heat output in a multi-engine operation mode, the at least two combustion engines including at least one combustion engine (14) configured to operate in a heat generation mode in which the heat output is greater than in the multi-engine operation mode; and
a controller (16) configured to control operation of the at least two combustion engines (12, 14),
wherein, when a total required heat output is less than a threshold heat output, the controller (16) is configured to stop operation of at least a first one (12) of the at least two combustion engines and operate at least a second one (14) of the at least two combustion engines in the heat generation mode such that a temperature of charge air of the at least one combustion engine (14) operating in the heat generation mode is increased to a temperature that is higher than in the multi-engine operation mode, thereby increasing a temperature of exhaust gas of the combustion engine (14), to recover heat from the exhaust gas having the increased temperature.

10. The multi-engine system according to claim 9, wherein the at least one combustion engine (14) configured to operate in the heat generation mode includes:
a combustion unit (24) for performing the combustion process;
a turbocharger (26) configured to receive and compress a flow of charge air for the combustion unit (24);
a high-temperature cooling circuit (30) configured to cool the flow of compressed charge air from the turbocharger (28);
a first heat recovery system (32) disposed in the high-temperature cooling circuit (30) and configured to recover heat from the high-temperature cooling circuit (30);
a low-temperature cooling circuit (34) disposed downstream of the high-temperature cooling circuit (32) to further cool the flow of compressed charge air provided to the combustion unit (24);
an exhaust system (36) configured to direct exhaust gas from the combustion unit (24) to the atmosphere; and
a second heat recovery system (38) disposed in the exhaust system (36) and configured to recover heat from the exhaust gas in the exhaust system (36).

11. The multi-engine system according to claim 10, wherein the at least one combustion engine (14) configured to operate in the heat generation mode further includes a heater (28) configured to heat the flow of charge air received by the turbocharger (26),
wherein at least one of the high-temperature cooling circuit (30) and the exhaust system (36) is configured to supply heat to the heater (28) to heat the charge air.

12. The multi-engine system according to claim 11, wherein the controller (16) is configured to control the amount of heat supplied to the heater (28).

13. The multi-engine system according to any one of claims 10 to 12, wherein the controller (16) is configured to operate the low temperature cooling circuit (34) at a reduced cooling power to increase the temperature of the charge air provided to the combustion unit (24) in the heat generation mode.

14. The multi-engine system according to any one of claims 9 to 13, wherein the controller (16) is configured to:
determine a required heat output; and
adjust the temperature of the charge air provided to the combustion unit (24) to generate at least the required heat output.

15. A program comprising computer-executable instructions which, when executed by a computer, cause the computer to perform the steps of the method according to any one of claims 1 to 8.
